# EUROPEAN PATENT SPECIFICATION

(11) **EP 1 700 779 B1**
(45) Date of publication and mention of the grant of the patent: **28.09.2011**
(21) Application number: 04807695.4
(22) Date of filing: 24.12.2004
(51) Int. Cl.: B60Q 1/26, B62J 6/04, B62J 23/00

(54) **Saddle-ride type vehicle**
Grätschsitz-Fahrzeug
Véhicule du type monté à califourchon

(30) Priority: 31.12.2003 CN 200310123867
(43) Date of publication of application: 13.09.2006
(73) Proprietor: Yamaha Hatsudoki Kabushiki Kaisha, Iwata-shi, Shizuoka 438-8501 (JP)
(72) Inventor: Hsiao Chi Hua;, No.3, Sec.2, Chunhwa Rd, Chunli; (TW); Wang, Shing-Yang;, No.3, Sec.2, Chunhwa Rd, Chunli; (TW); Lee, Chung, En;, No.3, Sec.2, Chunhwa Rd, Chunli; (TW); Shih, Wen-Chin;, No.3, Sec.2, Chunhwa Rd, Chunli; (TW)
(74) Representative: Grünecker, Kinkeldey, Stockmair & Schwanhäusser Anwaltssozietät
(86) International application number: PCT/JP2004/019338
(87) International publication number: WO 2005/063555

(56) References cited:
- JP-A- 4 078 779
- JP-A- 2003 081 153
- JP-A- 2003 104 265
- JP-A- 2003 170 880

## Description

The present invention relates to a saddle-ride type vehicle such as motorcycle, etc., according to the preamble of independent claims 1 and 2.

Conventionally, a rear combination light on a motorcycle, etc. is known, in which a taillight and left and right rear winkers are designed integrally (see, for example, JP-A-2002-104268. In the rear combination light, a taillight and rear winkers (simply referred below in a lamp to as light) are aligned successively and formed integrally. Therefore, in a vehicle provided with a rear combination light, it is contrived to improve the quality of design by virtue of integration of lights and to make a tail portion compact while ensuring visibility of lights. In addition, visibility of a light means easiness, with which a person (for example, pedestrians, riders of other motorcycles, drivers of automobiles, etc.) visually seeing a vehicle sees the light.

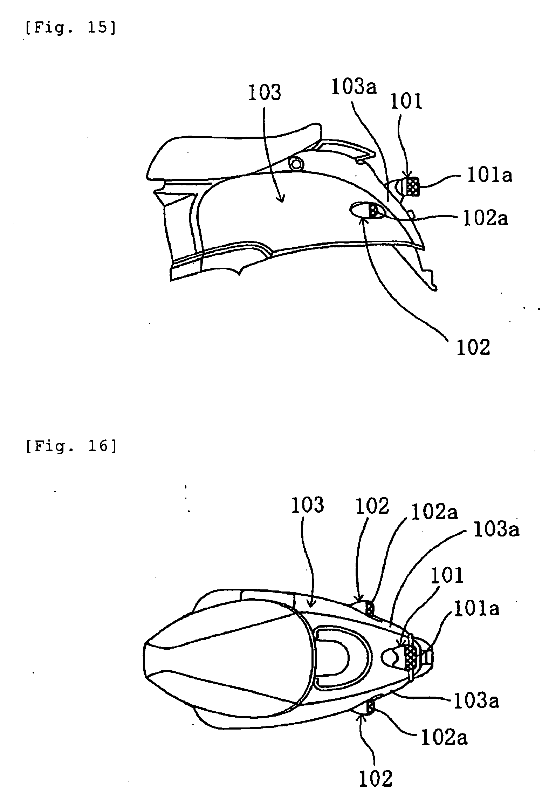

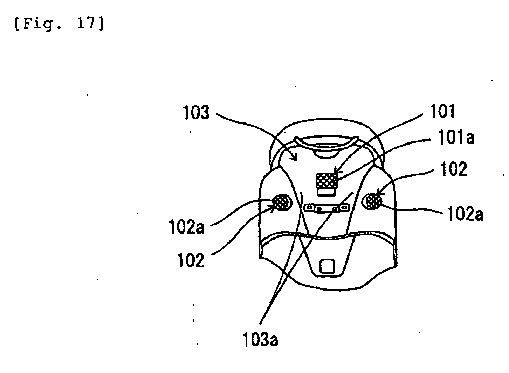

As shown in Figs. 15 to 17, a vehicle is also known, in which a taillight 101 and rear winkers 102 are separated from each other and partitioned by partitions 103a of a cover 103 (see, for example, "YJ50R Service Manual", Yamaha Hatusdoki Kabushiki Kaisha, August 1999, page 1-1). In addition, the reference numerals 101 a, 102a (cross-hatched portions in Figs. 15 to 17) denote lenses of the taillight 101 and the rear winkers 102, respectively. This type of vehicles are excellent in visibility of the taillight 101 and the rear winkers 102. However, this type of vehicles have a large distance between the left and right rear winkers 102 and so are liable to become large in a vehicle tail portion.
Further, there is known JP 2003-104265, JP 2003-081103, JP 4-078779 and JP 2003-170880 in which the taillight is respectively arranged in a horizontal or vertical direction.

In recent years, it is expected in saddle-ride type vehicles to make compactness of a tail portion and improvement in visibility of lights compatible with each other in a high level. It is an object of the invention to make compactness of a tail portion and an improvement in visibility of lights compatible with each other in a high level.

A vehicle for solving the above problems features the characteristics of Independent claim 1. Such vehicle comprising a taillight having a lens, right and left rear winkers, respectively, having a lens, and a cover having partitions between the taillight and the respective rear winkers, and wherein In a plan view, the rear winkers, the partitions, and the taillight together form a substantially V-shaped profile, and in a side view, rear ends of the lenses of the respective rear winkers are positioned rearwardly of a front end of the lens of the taillight, and at least portions of the lenses of the respective rear winkers are positioned below an upper end of the lens of the taillight and above a lower end of the lens of the taillight, so that, in side view, the respective rear winkers and the taillight overlap each other at least partially in a longitudinal direction and in a vertical direction.

In addition, a front end of a lens referred in the specification of the present specification indicates a portion positioned forwardmost out of portions of the lens. For example, in the case where the lens is tapered in shape toward the front, the tapered tip end constitutes a front end of the lens. In the case where a front side of the lens is defined by a straight side, which extends in a direction perpendicular to a longitudinal direction, as viewed from the outside, the side constitutes a front end of the lens. Likewise, a rear end, an upper end, and a lower end of a lens indicate portions positioned in the rearmost, uppermost, and lowermost of the lens, respectively. Also, an inner end and an outer end of a lens indicate portions positioned in the innermost and the outermost of the lens.

With the saddle-ride type vehicle, since the rear winkers, the partitions, and the taillight have a substantially V-shaped profile as viewed in plan view, a tail portion of the vehicle becomes small in width and so it is possible to achieve compactness of the tail portion. On the other hand, rear ends of the lenses of the respective rear winkers are positioned rearwardly of a front end of the lens of the taillight and at least portions of the lenses of the respective rear winkers are positioned below an upper end of the lens of the taillight and above a lower end thereof, so that the respective rear winkers and the taillight overlap each other at least partially in a longitudinal direction and in a vertical direction. Therefore, with the saddle-ride type vehicle described above, the taillight and the rear winkers are large in area. Accordingly, since the taillight and the rear winkers are large in area although the taillight is made compact, visibility is improved. Accordingly, with the saddle-ride type vehicle described above, it is possible to make compactness of the tail portion and improvement in visibility of the lights compatible with each other in a high level.

Moreover, a vehicle for solving the above problems features the characteristics of independent claim 2. Such vehicle comprising a taillight having a lens, right and left rear winkers, respectively, having a lens, and a cover having partitions between the taillight and the respective rear winkers, and wherein, in a plan view, the rear winkers, the partitions, and the taillight together form a substantially V-shaped profile, and in a rear view inner ends of the lenses of the respective rear winkers are positioned inwardly of outer ends of the lens of the taillight as viewed from the rear, and at least portions of the lenses of the respective rear winkers are positioned below an upper end of the lens of the taillight and above a lower end of the lens of the taillight, so that, in rear view, the respective rear winkers and the taillight overlap each other at least partially in a right and left direction and in a vertical direction.

With the vehicle, since inner ends of the lenses of the respective rear winkers are positioned inwardly of outer ends of the lens of the taillight as viewed from the rear, and at least portions of the lenses of the respective rear winkers are positioned below an upper end of the lens of the taillight and above a lower end thereof, the respective rear winkers and the taillight overlap each other at least partially in a right and left direction and in a vertical direction. Therefore, since the taillight and the rear winkers are large in area although the taillight is made compact, visibility is improved. Accordingly, with the saddle-ride type vehicle described above, it is possible to make compactness of the tail portion and improvement in visibility of the lights compatible with each other in a high level.

As described above, it is possible according to the invention to make compactness of a tail portion and improvement in visibility of lights compatible with each other in a high level.
Further embodiments of the vehicle arise from the subclaims.

[Fig. 1] Fig. 1 is a side view showing a motorcycle according to a first embodiment.
[Fig. 2] Fig. 2 is a plan view showing a rear portion of the motorcycle according to the first embodiment.
[Fig. 3] Fig. 3 is a side view showing a tail portion of the motorcycle according to the first embodiment.
[Fig. 4] Fig. 4 is a back view showing the tail portion of the motorcycle according to the first embodiment.
[Fig. 5] Fig. 5 is a cross sectional view taken along the line V-V in Fig. 3.
[Fig. 6] Fig. 6 is a cross sectional view taken along the line VI-VI in Fig. 3.
[Fig. 7] Fig. 7 is a plan view showing a tail portion of a motorcycle according to a second embodiment.
[Fig. 8] Fig. 8 is a side view showing a tail portion of the motorcycle according to the second embodiment.
[Fig. 9] Fig. 9 is a plan view showing an essential part of a motorcycle according to a third embodiment.
[Fig. 10] Fig. 10 is a side view showing the essential part of the motorcycle according to the third embodiment.
[Fig. 11] Fig. 11 is a back view showing the essential part of the motorcycle according to the third embodiment.
[Fig. 12] Fig. 12 is a side view showing a tail portion of a motorcycle according to a further embodiment.
[Fig. 13] Fig. 13 is a plan view conceptionally showing a tail portion of a motorcycle according to a further embodiment.
[Fig. 14] Fig. 14 is a plan view conceptionally showing a tail portion of a motorcycle according to a further embodiment.
[Fig. 15] Fig. 15 is a side view showing a rear portion of a conventional motorcycle.
[Fig. 16] Fig. 16 is a plan view showing the rear portion of the conventional motorcycle.
[Fig. 17] Fig. 17 is a back view showing the rear portion of the conventional motorcycle.

### Description of Reference Numerals

2: cover
2a: partition
3: winker (rear winker)
3a: light source
3b: lens
5: taillight
5b: lens
11: motorcycle (saddle-ride type vehicle)
21 to 26: ridgeline

### Best Mode for Carrying Out the Invention

Embodiments of the invention will be described below with reference to the drawings.

### (First embodiment)

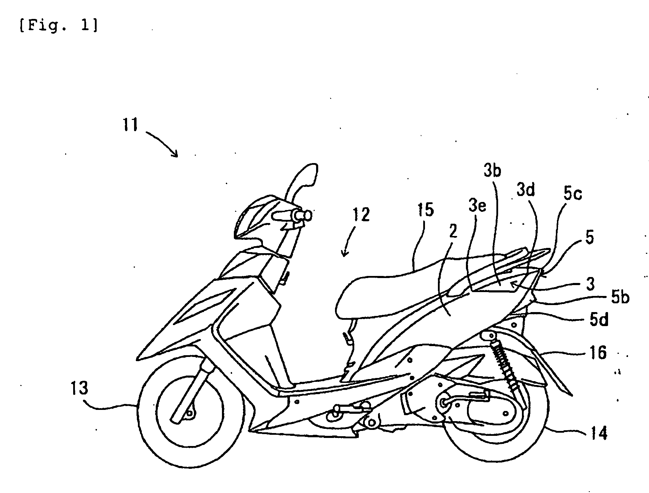

As shown in Fig. 1, a saddle-ride type vehicle according to an embodiment comprises a so-called scooter-type motorcycle 11. However, the saddle-ride type vehicle according to the embodiment is not limited to a scooter-type motorcycle but may comprise a motorcycle of other type. "Motorcycles" include motorbikes, etc. in addition to scooters. Also, the saddle-ride type vehicle according to the invention is not limited to motorcycles. Saddle-ride type vehicles also include ATV (All-terrain vehicles), snowmobiles, etc.

The motorcycle 11 comprises a vehicle body 12, a front wheel 13 provided on a front side of the vehicle body 12, and a rear wheel 14 provided on a rear side of the vehicle body 12. A seat 15 is provided to extend from a center of the vehicle body 12 to a tail portion. Amud guard 16 is provided rearwardly and obliquely upwardly of the rear wheel 14.

A fuel tank (not shown) , etc. is arranged below the seat 15 and a cover 2 is provided around the fuel tank, etc. The cover 2 is arranged to extend from the tail portion of the vehicle body 12 to left and right sides. Since the cover 2 covers the tail and sides of the vehicle body 12, it functions not only as a tail cover but also as a side cover. According to the embodiment, the cover 2 is composed of a pair of laterally divided cover members. However, the cover 2 may comprise an integral body or may be assembled by three or more members. In addition, in the following descriptions, the front side and rear side of the vehicle are simply referred to as the front side and the rear side, and a right side and a left side as seen by a crew seated on the seat 15 are simply referred to as a right side and a left side, respectively.

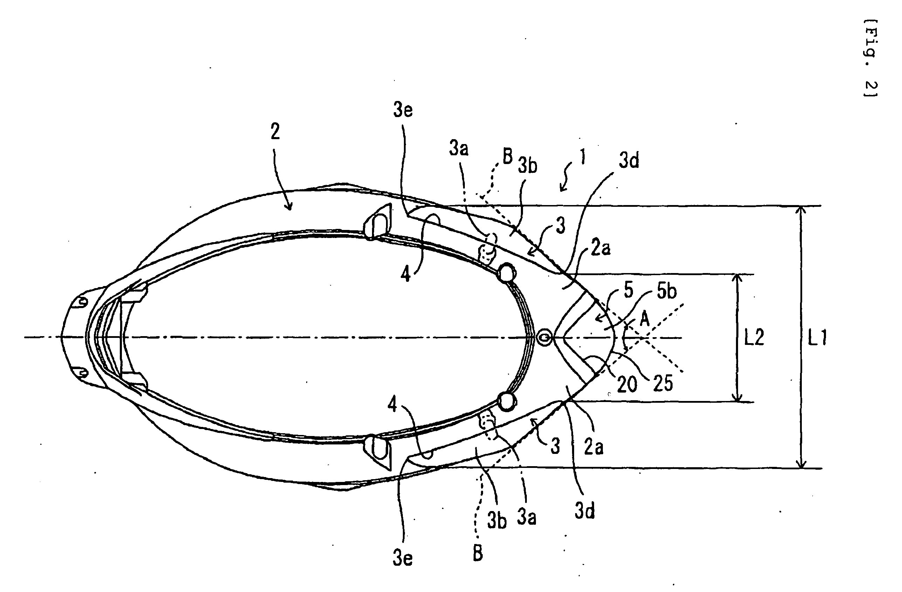

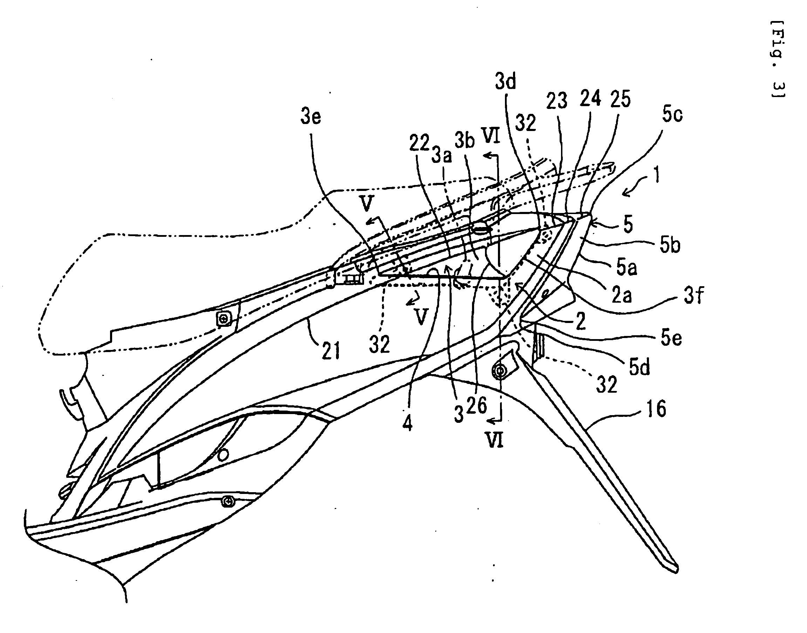

As shown in Fig. 2, the cover 2 is formed to have a substantially elliptical profile as viewed in plan view. The cover 2 is provided on the rear side thereof with a notch 20, into which a taillight 5 is fitted. As viewed in plan view, the notch 20 is formed to be substantially V-shaped to diverge rearward. Winker arrangement holes 4, into which winkers 3 are fitted, respectively, are formed rearward on both sides of the cover 2. As shown in Fig. 3, the winker arrangement holes 4 are formed to be substantially triangular-shaped as viewed in side view. Partitions 2a of the cover 2 are provided between the notch 20 and the winker arrangement holes 4. The winker arrangement holes 4 are formed midway the substantially V-shaped cover 2. Concretely, the winker arrangement holes 4 are formed on a smooth surface (a surface devoid of any step except ridgelines 21, 23, 24 described later) of the cover 2 (see Fig. 2). Thereby, the winkers 3 and the cover 2 are improved in integration.

As shown in Fig. 3, the cover 2 extends rearward and obliquely upward as viewed in side view. The cover 2 is provided with the ridgelines 21, which extend in a direction of extension of the cover 2, that is, rearward and obliquely upward. The ridgelines 21 comprise a linear portion, in which a portion of the cover 2 is made convex toward an outside, and "ridgelines" referred to herein include portions, which are curved at a sharp angle, not to mention portions, which are convexly bent toward an outside. Accordingly, even curved portions correspond to "ridgelines" referred to in the specification of the present specification as far as a linear configuration can be discriminated as viewed from outside. The same is with the respective ridgelines 22 to 26 described later.

As shown in Fig. 3, the winkers 3 are fitted into the winker arrangement holes 4. The winkers 3 comprise a light source 3a, and a transparent lens 3b that covers the light source 3a. In addition, a type of the light source 3a is not specifically limitative. The lens 3b may be colorless and transparent, or may be colored and transparent. As far as visibility can be ensured sufficiently, the lens 3b may be opaque.

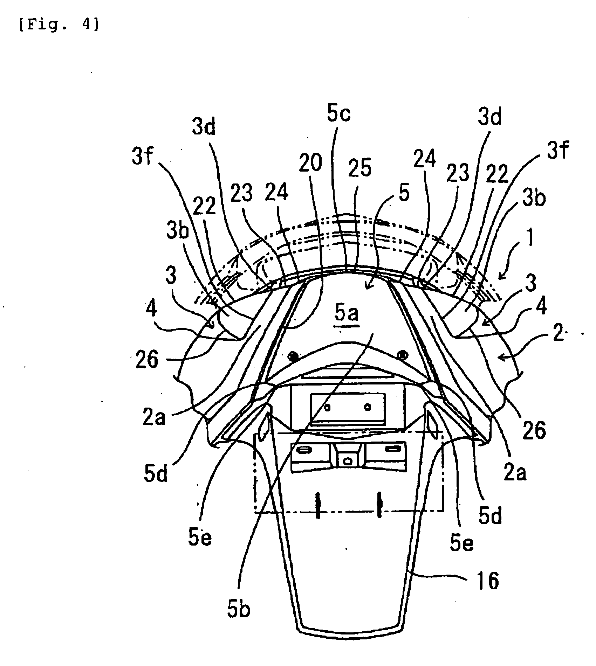

As shown in Fig. 3, the lens 3b is formed to be substantially triangular-shaped to diverge rearward from a front end 3e as viewed in side view. Therefore, the lens 3b has a sufficient surface area while presenting a compact, external appearance. The lens 3b comprises a so-called long-sideways lens, the lens 3b having a lengthwise (substantially vertical) length larger than a widthwise (substantially horizontal) length. Also, not only in the case of being viewed from laterally, but also in the case of being viewed from the rear, the lens 3b has a widthwise length larger than a lengthwise length. Since the lens 3b is arranged along the cover 2, it can be enlarged in surface area while being made compact as a whole. A rear side 3f of the lens 3b is inclined rearward and obliquely upward. In addition, the reference character 3d denotes a rear end of the lens 3b. As shown in Fig. 4, since the rear end 3d is positioned innermost of the lens 3b as viewed from the rear, the rear end 3d corresponds to an inner end of the lens 3b in the embodiment.

As shown in Fig. 3, the lens 3b comprises the ridgeline 22 extending rearward and obliquely upward, and the ridgeline 26 extending downward from an intermediate portion of the ridgeline 22. That is, the lens 3b comprises the ridgeline 22 extending in a substantially longitudinal direction, and the ridgeline 26 extending in a substantially vertical direction. The ridgeline 22 is positioned on an extension of the ridgeline 21 of the cover 2 to be substantially contiguous to the ridgeline 21. In addition, the ridgelines 22, 26 may extend straight, or may extend curvedly (including a curved line and a bent line).

As shown in Figs. 2 and 4, the lens 3b projects further toward the outside than the cover 2 does. Inclinations at the rear end 3d of the lens 3b in left and right directions are larger than those of the cover 2. In particular, since the lens 3b includes the ridgeline 26 extending in a substantially vertical direction, it projects toward the outside as viewed in plan view to be formed in a conspicuous shape. As shown in Fig. 2, the lens 3b is formed to be substantially triangular-shaped as viewed in plan view. Also, since the lens 3b includes the ridgeline 22 extending in a substantially longitudinal direction, it projects toward the outside as viewed from the rear to be formed in a conspicuous shape. Thereby, the winkers 3 are improved in visibility.

As shown in Fig. 3, the partition 2a of the cover 2 is formed to be band-shaped substantially in parallel to the rear side 3f of the lens 3b, and extends in a direction inclined relative to the vertical as viewed in side view. A width of the partition 2a, that is, a length of the partition 2a in a direction perpendicular to the longitudinal direction is substantially constant in the longitudinal direction. Accordingly, the winkers 3 and the taillight 5 are partitioned at substantially constant spaces. The partition 2a comprises the ridgelines 23, 24 extending rearward and obliquely upward as viewed in side view. The ridgeline 23 is contiguous to the ridgeline 22, and the ridgeline 24 is contiguous to the ridgeline 23.

The taillight 5 comprises a light source (not shown), and a lens 5b that covers the light source. The lens 5b may be transparent or opaque. The lens 5b includes the ridgeline 25 extending rearward and obliquely upward as viewed in side view. The ridgeline 25 is contiguous to the ridgeline 24 of the partition 2a. The lens 5b of the taillight 5 is divided into upper and lower portions with the ridgeline 25 as a border therebetween, a rearwardly upward, inclined surface 5a being formed below the ridgeline 25, and a rearwardly downward, inclined surface being formed above the ridgeline 25. As shown in Fig. 2, the taillight 5 has a profile convexly curved rearward as viewed in plan view. Here, the ridgeline 25 described above defines the profile described above. As shown in Fig. 4, the taillight 5 is formed to be substantially trapezoidal in shape as viewed from the rear, and an upper side (that is, the ridgeline 25) and a lower side thereof are convexly curved upward.

As shown in Fig. 2, the left and right winkers 3, the partitions 2a, and the taillight 5 have a substantially V-shaped profile as viewed in plan view. Here, an angle A formed by tangents B at front ends of the both partitions 2a is preferably 40° to 140°. The taillight 5 is arranged inside and forwardly of the both tangents B. Also, a ratio L1/L2 of a distance L1 between outer ends of the both winkers 3 in a direction (a vertical direction in Fig. 2) along a vehicle breadth to a distance L2 between rear ends of the both winkers 3 in a direction along the vehicle breadth is preferably 1.5 or more.

As shown in Fig. 3, the rear ends 3d of the lenses 3b of the respective winkers 3 are positioned rearwardly of front ends 5d of the lens 5b of the taillight 5. In addition, since the front ends 5d are positioned, as shown in Fig. 4, to be outermost of the lens 5b as viewed from the rear, the front ends 5d corresponds to outer ends of the lens 5b.

As shown in Fig. 3, the lenses 3b of the respective winkers 3 are positioned below an upper end 5c of the lens 5b of the taillight 5 and above a lower end 5e. That is, the lenses 3b and the lens 5b overlap each other at least partly with respect to the longitudinal direction and the vertical direction.

As shown in Fig. 4, the inner ends 3d of the lenses 3b of the respective winkers 3 are positioned inwardly of the outer ends 5d of the lens 5b of the taillight 5 as viewed from the rear. More specifically, the inner end 3d of the right lens 3b is positioned leftwardly of the outer end 5d of the lens 5b and the inner end 3d of the left lens 3b is positioned rightwardly of the outer end 5d of the lens 5b.

As described above, the ridgeline 21 of the cover 2, the ridgeline 22 of the lens 3b of the winker 3, the ridgelines 23, 24 of the partition 2a, and the ridgeline 25 of the lens 5b of the taillight 5 are substantially contiguous and extend rearward and obliquely upward as viewed in side view. Therefore, these ridgelines 21 to 25 overlap one another as viewed from the rear (see Fig. 4). Accordingly, these ridgelines 21 to 25 can be easily discriminated from the rear. Also, the lens 3b of the winker 3 is arranged in a position not overlapping the ridgelines 23, 24 of the partition 2a as viewed from the rear. The light source 3a of the winker 3 does not also overlap the ridgelines 23, 24.

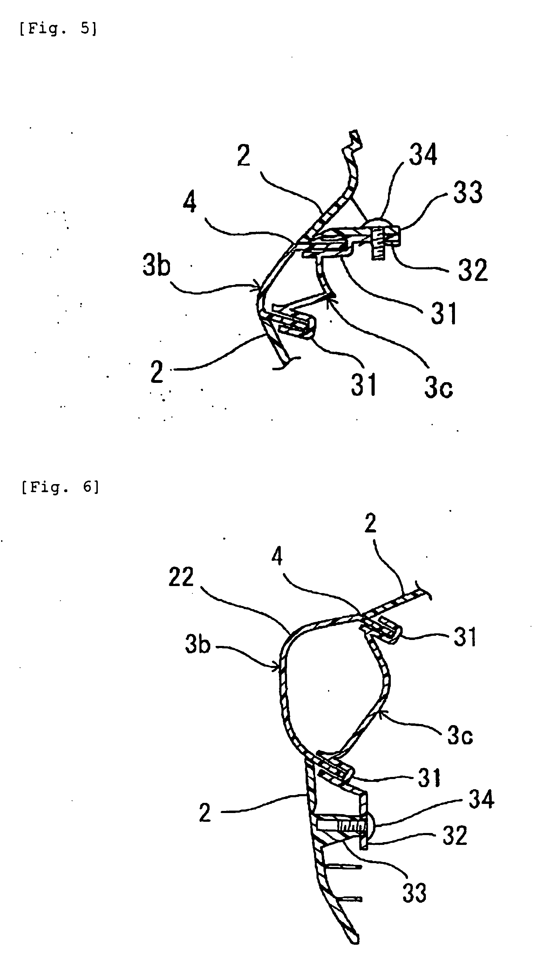

Subsequently, a mount structure of the winkers 3 will be described. As shown in Figs. 5 and 6, a reflector 3c of the winker 3 is formed with an engagement 31 that engages with a peripheral edge of the lens 3b. After the lens 3b is fixed to the engagement 31, it is made integral with the reflector 3c and the light source 3a (not shown in Figs. 5 and 6) and fitted into the winker arrangement hole 4 of the cover 2 from behind to face an outside. The reflector 3c is provided with a mount seat 32, which is formed with a threaded hole, and a mount seat 32 formed with a threaded hole is also provided on an inside of the cover 2. After the winker 3 is fitted into the winker arrangement hole 4, the mount seat 32 and the mount seat 33 are fixed together by a screw 34. Thereby, the winker 3 is fixed to the cover 2.

Described above is an assembly structure 1 of the winker 3 and the taillight 5 according to the first embodiment.

As described above, with the motorcycle 11, the winkers 3, the partitions 2a, and the taillight 5 have a substantially V-shaped profile as viewed in plan view (see Fig. 2), so that the tail portion is small in width and compactness of the tail portion can be achieved.

On the other hand, since the rear ends 3d of the lenses 3b of the winkers 3 are positioned rearwardly of the front ends 5d of the lens 5b of the taillight 5, and the lenses 3b are positioned below the upper end 5c of the lens 5b and above the lower end 5e, the winkers 3 and the taillight 5 are enlarged in area. Also, since the inner ends 3d of the lenses 3b are positioned inwardly of the outer ends 5d of the lens 5b as viewed from the rear, the winkers 3 and the taillight 5 are further enlarged in area.

Therefore, since the winkers 3 and the taillight 5 are enlarged in area although the tail portion is small in width, these lights (that is, the winkers 3 and the taillight 5) can be improved in visibility. Accordingly, it is possible to make compactness of the tail portion and improvement in visibility of the lights compatible with each other in a high level. Also, it is possible to achieve streamlining the tail portion to ensure integration of the winkers 3 and the taillight 5.

The lenses 3b of the winkers 3 include the ridgelines 22, 26facing convexly to ward the outside. Generally, ridgeline portions are liable to be conspicuous and can be visually recognized even from afar with ease. Accordingly, it is possible in the motorcycle 11 to further improve visibility of the winkers 3. In addition, since the ridgelines 22, 26 form only portions of the winkers 3, visibility can be improved even when the winkers 3 are not enlarged as a whole. Therefore, it is possible to improve visibility while achieving compactness of the vehicle.

Also, the partitions 2a of the cover 2 include the ridgelines23, 24 facing convexly toward the outside. Therefore, the partitions 2a have a concave and convex configuration to be heightened in stiffness. Accordingly, it is possible to decrease the partitions 2a in width to achieve a further compactness of the tail portion.

Also, with the motorcycle 11, the ridgelines 22 of the lenses 3b of the winkers 3 and the ridgelines 23, 24 of the partitions 2a overlap each other as viewed from the rear. Therefore, it is possible to easily discriminate the winkers 3 without being obstructed by the partitions 2a. Accordingly, visibility of the winkers 3 is improved further.

Also, the light source 3a of the winkers 3 is arranged in a position not overlapping the ridgelines 23, 24 of the partitions 2a as viewed from the rear. Therefore, it is possible to easily discriminate the winkers 3 without being obstructed by the partitions 2a. Accordingly, visibility of the winkers 3 can be improved further.

Also, with the motorcycle 11, the lens 5b of the taillight 5, the partitions 2a, and the lenses 3b of the winkers 3 include the ridgelines 22 to 25 extending substantially in the longitudinal direction to be contiguous to one another. Accordingly, it is possible to enhance integration of the taillight 5, the cover 2, and the winkers 3.

According to the embodiment, since the lenses 3b of the winkers 3 are transparent, it is possible to clearly and distinctly discriminate flashing of the winkers 3. Also, since the winkers 3 give a compact impression, design can be improved in quality.

The lens 5b of the taillight 5 is formed on a rear portion thereof with the rearwardly upward, inclined surface 5a. Since the rear portion of the lens 5b defines a slope in this manner, the lens 5b is large in surface area as compared with the case where the lens defines a vertical surface. Therefore, visibility of the taillight 5 can be improved further.

With the motorcycle 11, the partitions 2a are present between the taillight 5 and the winkers 3, so that it is possible to further improve visibility of the taillight 5 and the winkers 3. Also, the partitions 2a are substantially constant in width along the length of the partitions 2a. Therefore, the taillight 5 and the winkers 3 are partitioned with substantially constant widths therebetween, so that signaling thereof becomes liable to be further distinguishable. Accordingly, it is possible to further improve visibility of the taillight 5 and the winkers 3.

Also, since the partitions 2a are substantially constant in width, the taillight 5 and the winkers 3 can be arranged closer to each other in a substantially entire region along the length of the partitions 2a. Accordingly, it is possible to make the tail portion compact while ensuring sufficient areas for the lens 5b of the taillight 5 and the lenses 3b of the winkers 3.

Also, the partitions 2a extend rearward and obliquely upward as viewed in side view. That is, the partitions 2a extend in a direction inclined relative to the vertical as viewed in side view. Thereby, both sides, in which the taillight 5 and the winkers 3 face each other with the partitions 2a therebetween, are inclined forwardly downward. Therefore, such sides become large in length, so that it is possible to further improve visibility of the taillight 5 and the winkers 3.

Also, with the motorcycle 11, since the lenses 3b of the winkers 3 project toward the outside, it presents an easily discriminable shape and is enlarged in area. Therefore, it is possible to further improve visibility of the winkers 3.

Further, the lenses 3b of the winkers 3 project further toward the outside than the cover 2 does. Therefore, it is possible to further improve visibility of the winkers 3. In addition, the lenses 3b of the winkers 3 project further toward the outside in a right and left direction than the cover 2 does, as viewed in plan view. Therefore, even when the lenses 3b of the winkers 3 are enlarged in surface area, a bulge of the cover 2 in the right and left direction is decreased, so that it is possible to make the tail portion of the motorcycle 11 further compact.

Also, since the winkers 3 are formed to be substantially triangular-shaped as viewed in plan view, they present an easily discriminable shape. Accordingly, not only from the viewpoint of arrangement but also from the configurational viewpoint, it is possible to further improve visibility of the winkers 3.

With the motorcycle 11, an angle A formed by tangents B at the front ends of the both partitions 2a is 40° to 140° as viewed in plan view. Accordingly, it is possible to restrict the tail portion in width and to achieve compactness of the tail portion while improving visibility.

Further, since the taillight 5 is arranged inside and forwardly of the both tangents B, it is possible to make the tail portion further small in size.

Also, with the motorcycle 11, the ratio L1/L2 of the distance L1 between the outer ends of the both winkers 3 in a direction along a vehicle breadth to the distance L2 between the rear ends of the both winkers 3 in the direction along the vehicle breadth is 1.5 or more. Therefore, it is possible to achieve compactness of the tail portion while improving visibility of the winkers 3.

### (Second embodiment)

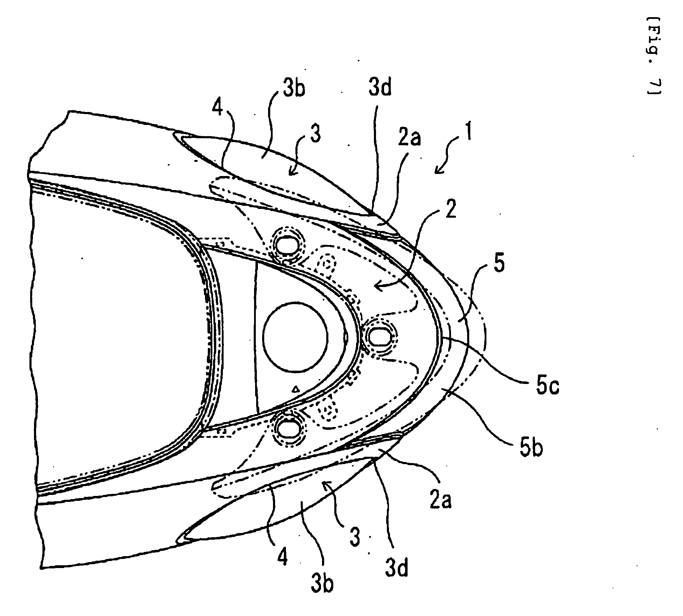

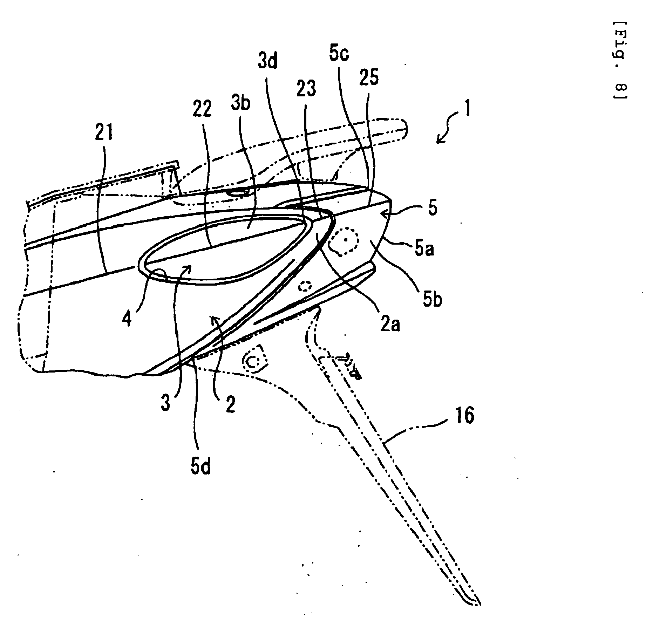

Subsequently, with reference to Figs. 7 and 8, an explanation will be given to a saddle-ride type vehicle according to a second embodiment. According to the embodiment, the tail portionof the motorcycle 11 of the first embodiment is modified. Elements corresponding to those in the first embodiment are denoted by the same reference numerals as those in latter.

Also, in the second embodiment, a taillight 5 and winkers 3 are partitioned by partitions 2a of a cover 2. As shown in Fig. 7, the winkers 3, the partitions 2a, and the taillight 5 have a substantially V-shaped profile as viewed in plan view.

As shown in Fig. 8, rear ends 3d of lenses 3b of the respective winkers 3 are positioned rearwardly of front ends 5d of a lens 5b of the taillight 5. In addition, according to the embodiment, the front ends 5d of the lens 5b correspond to lower ends of the lens 5b. Also, according to the embodiment, the lenses 3b are positioned below an upper end 5c of the lens 5b and above the lower ends 5d. Also, as viewed from the rear, inner ends (= rear ends 3d) of the lenses 3b of the respective winkers 3 are positioned inwardly of outer ends (= rear ends 5d) of the lens 5b of the taillight 5.

As shown in Fig. 8, the cover 2, the lenses 3b of the winkers 3, the partitions 2a of the cover 2, and the lens 5b of the taillight 5, respectively, include ridgelines 21, 22, 23, 25 facing convexly toward the outside. The ridgelines 21, 22, 23, 25 are substantially contiguous and extend rearward and obliquely upward as viewed in side view. Also, according to the embodiment, the ridgelines 23 of the partitions 2a and the ridgelines 22 of the winkers 3 overlap each other as viewed from the rear. The taillight 5 is formed with a rearwardly upward, inclined surface 5a. The partitions 2a extend in a direction inclined relative to the vertical and are substantially constant in width.

As shown in Fig. 7, the lenses 3b of the winkers 3 project further toward the outside than the cover 2 does, as viewed in plan view. According to the embodiment, the winkers 3 are formed to be substantially elliptical-shaped as viewed in plan view. Also, as shown in Fig. 8, the winkers 3 are formed to be substantially elliptical-shaped to tilt forward, as viewed in side view.

Also, according to the embodiment, an angle formed by tangents at front ends of the both partitions 2a is set to 40° to 140° as viewed in plan view. The taillight 5 is arranged inside and forwardly of the both tangents. Also, a ratio of a distance between outer ends of the both winkers 3 in a direction along a vehicle breadth to a distance between rear ends of the both winkers 3 in the direction along the vehicle breadth assumes 1.5 or more.

Accordingly, the various effects described above can be produced in the second embodiment.

### (Third embodiment)

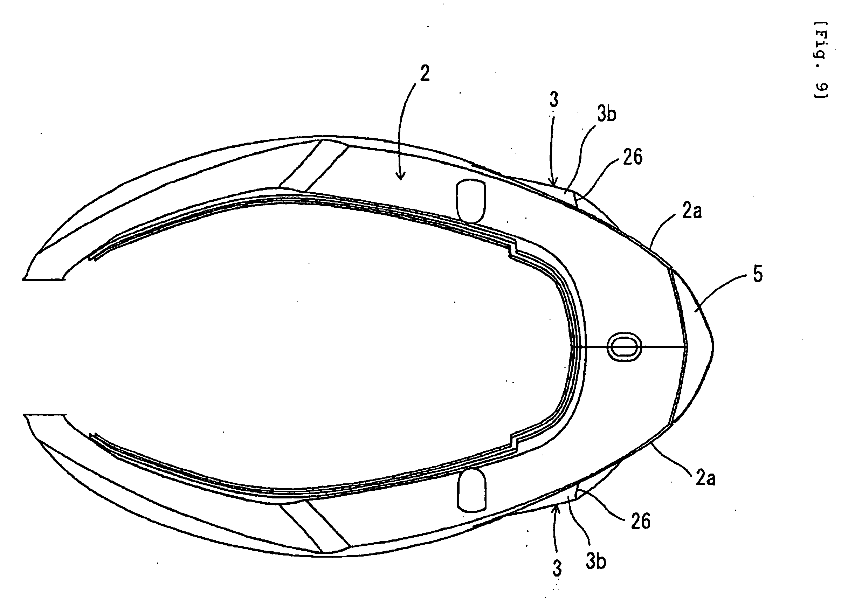

With reference to Figs. 9 to 11, an explanation will be given to a saddle-ride type vehicle according to a third embodiment. Also, according to the embodiment, the tail portion of the motorcycle 11 of the first embodiment is modified. Elements corresponding to those in the first embodiment are denoted by the same reference numerals as those in the latter.

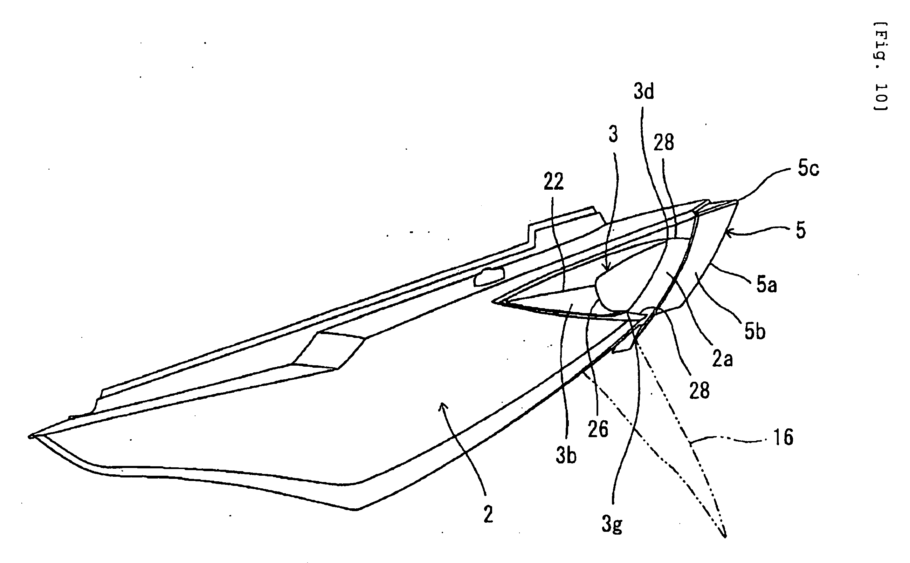

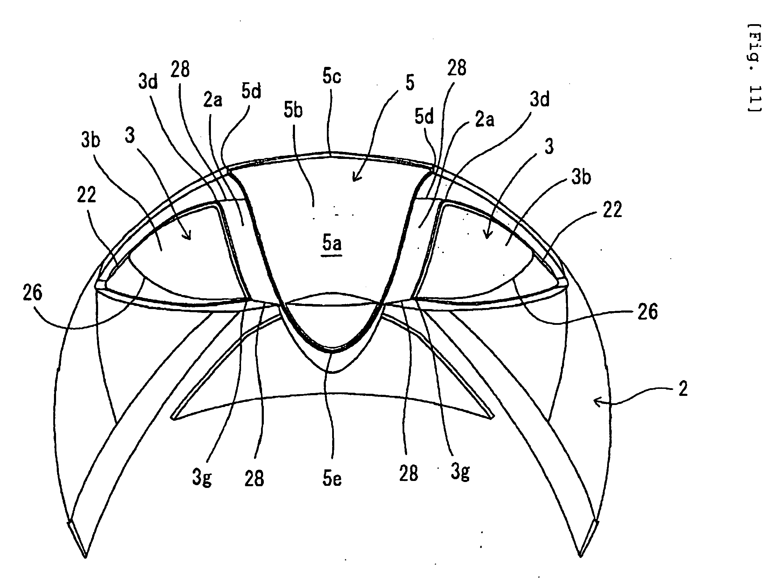

Also, in the third embodiment, a taillight 5 and winkers 3 are partitioned by partitions 2a of a cover 2. As shown in Fig. 9, the winkers 3, the partitions 2a, and the taillight 5 have a substantially V-shaped profile as viewed in plan view. As shown in Fig. 10, rear ends 3d of lenses 3b of the winkers 3 are positioned rearwardly of a front end of a lens 5b of the taillight 5. In addition, according to the embodiment, a lower end 5e shown in Fig. 11 corresponds to the front end of the lens 5b. Also, as shown in Fig. 11, the lenses 3b are positioned below an upper end 5c of the lens 5b and above a lower end 5e. Further, as viewed from the rear, inner ends 3g of the lenses 3b of the respective winkers 3 are positioned inwardly of outer ends 5d of the lens 5b of the taillight 5.

As shown in Fig. 10, the lenses 3b of the winkers 3 include a ridgeline 22 extending substantially horizontally (strictly, rearward and obliquely upward) and a ridgeline 26 extending substantially vertically. The partitions 2a comprise a valley 28 extending substantially horizontally. That is, the partitions 2a comprise a concave surface. Therefore, the partitions 2a do not get in the way when the winkers 3 are seen from the rear. Accordingly, it is possible to improve visibility of the winkers 3. Aback surface 5a of the taillight 5 defines a rearwardly upward, inclinedsurface. Thepartitions 2a extend in a direction inclined relative to the vertical as viewed in side view, and are substantially constant in width.

As shown in Fig. 9, the lenses 3b of the winkers 3 project further toward the outside than the cover 2 does. Also, according to the embodiment, the winkers 3 are formed to be substantially triangular-shaped as viewed in plan view. Also, the winkers 3 are also formed to be substantially triangular-shaped as viewed in side view (see Fig. 10). On the other hand, rear ends 3d of the winkers 3 are recessed inward from a profile of the cover 2 as viewed in plan view. As viewed in plan view, a ratio of a distance between outer ends of the both winkers 3 in a direction along a vehicle breadth to a distance between rear ends 3d of the both winkers 3 in the direction along the vehicle breadth assumes 1.5 or more.

Accordingly, the various effects described above can be also produced in the third embodiment.

### (Other embodiments)

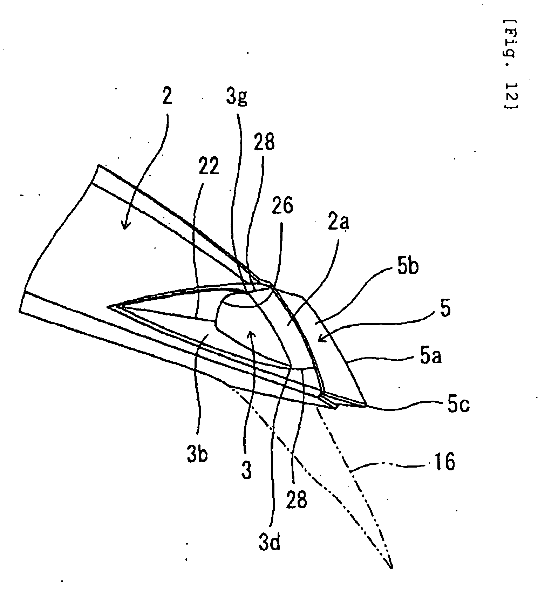

Arrangements of the winkers 3, the partitions 2a, and the taillight 5 in the respective embodiments can be also made use of in configurations, in which they are turned upside down. For example, a tail portion of a motorcycle shown in Fig. 12 is arranged and structured such that the winkers 3 and the taillight 5 in the third embodiment are turned upside down. Accordingly, according to the embodiment, the taillight 5 comprises a rearwardly downward, inclined surface 5a. Also, according to the embodiment, the various effects described above can be produced.

According to the respective embodiments, the winkers 3, the partitions 2a of the cover 2, and the taillight 5 have a substantially V-shaped profile as viewed in plan view. Here, the term "substantially V-shaped" means the provision of a pair of right and left surfaces (may be flat ones, or curved ones, or a combination thereof) spreading right and left toward the front from the back as viewed in plan view. The term "substantially V-shaped"does not necessarily mean the presence of a corner or a discontinuous portion at the rear end of the taillight 5. A profile of the rear end of the taillight 5 may be formed from a curve, such as arc, having a gentle inclination, or a smooth curve devoid of discontinuous portions as in the second embodiment (see Fig. 7).

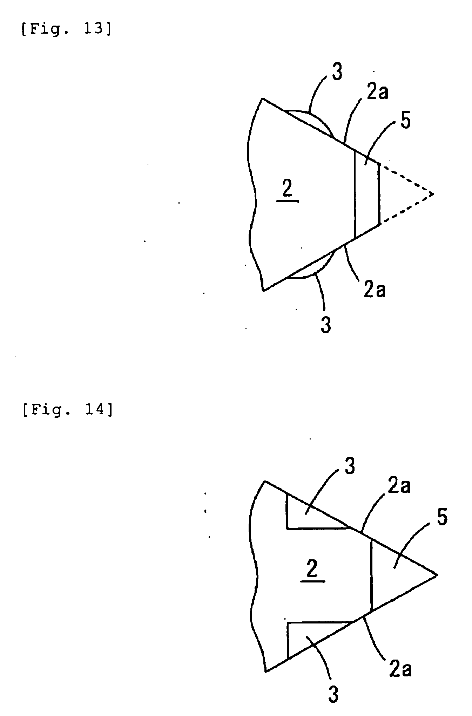

Also, the "substantially V-shaped" includes a shape obtained by partially cutting off a V-shape as shown in Fig. 13. That is, the "substantially V-shaped" also includes a configuration, in which an imaginary line obtained by extending a profile of the taillight 5, etc. rearwardbecomes substantially V-shaped. Also, the profile is not necessarily extended linearly but may be changed in angle on the way. Of course, profiles of the winkers 3, the partitions 2a, and the taillight 5 may be substantially linear as shown in Fig. 14.

The shape of the winkers 3 is not limited to a substantially triangular or substantially elliptical one but maybe otherwise, such as circular, substantially square, substantially rectangular (includes one having rounded corners). Also, the shape of the taillight 5 is not limited to ones in the respective embodiments. Of course, the partitions 2a of the cover 2 can be variously modified in shape.

### Industrial Applicability

As described above, the invention is useful for saddle-ride type vehicles such as motorcycles.

## Claims

1. A saddle-ride type vehicle (11) comprising a taillight (5) having a lens (5b), right and left rear winkers (3), respectively, having a lens (3b), and a cover (2) having partitions (2a) between the taillight (5) and the respective rear winkers (3), and
in a side view,
rear ends of the lenses (3b) of the respective rear winkers (3) are positioned rearwardly of a front end of the lens(5b) of the taillight (5), and
at least portions of the lenses (3b) of the respective rear winkers(3) are positioned below an upper end of the lens (5b) of the taillight (5), so that, in the side view, the respective rear winkers (3) and the taillight (5) overlap each other at least partially in a vertical direction
**characterized in that** in a plan view, the rear winkers (3), the partitions (2a) and the taillight (5) together form a substantially V-shaped profile, and at least portions of the lenses (36) of the respective rear winkers (3) are positioned above a lower end of the lens (3b) of the taillight (5), so that, in the side view, the respective rear winkers (3) and the taillight (5) overlap each other at least partially in a longitudinal direction.

2. A saddle-ride type vehicle (11) comprising a taillight (5) having a lens (5b), right and left rear winkers (3), respectively, having a lens (3b), and a cover (2) having partitions (2a) between the taillight (5) and the respective rear winkers (3), and
in a rear view
inner ends of the lenses (3b) of the respective rear winkers (3) are positioned inwardly of outer ends of the lens (5b) of the taillight (5), and
at least portions of the lenses (3b) of the respective rear winkers (3) are positioned below an upper end of the lens (3b) of the taillight (5), so that, in the rear view, the respective rear winkers (3) and the taillight (5) overlap each other at least partially in a vertical direction
characetrized in that in a plan view, the rear winkers (3), the partitions (2a), and the taillight (5) together form a substantially V-shaped profile and at least portions of the lenses (3b) of the respective rear winkers (3) are positioned above a lower end of the lens of the taillight, so that, in the rear view, the respective rear winkers (3) and the taillight (5) overlap each other at least partially in a right and left direction.

3. Saddle-ride type vehicle according to claim 1, wherein, as viewed from the rear, inner ends of the lenses (3b) of the respective rear winkers (3) are positioned inwardly of outer ends of the lens (5b) of the taillight (5), and wherein at least portions of the lenses (3b) of the respective rear winkers (3) are positioned below the upper end of the lens (5b) of the taillight (5) and above the lower end of the lens (5b) of the taillight (5).

4. Saddle-ride type vehicle according to one of the claims 1 to 3, wherein the lenses (3b) of the rear winkers (3) include ridgelines (22, 26) facing convexly toward the outside.

5. Saddle-ride type vehicle according to one of the claims 1 to 4, wherein the partitions (2a) include ridgelines (23,24) facing convexly toward the outside.

6. Saddle-ride type vehicle according to one of the claims 1 to 3, wherein the lenses (3b) of the rear winkers (3) and the partitions (2a), respectively include ridgelines (22,23,24,26) facing convexly toward the outside, and the ridgelines (23,24) of the partitions (2a) and the ridgelines (22,26) of the lenses (3b) of the rear winkers (3) do not overlap each other as viewed from the rear.

7. Saddle-ride type vehicle according to one of the claims 1 to 3, wherein the partitions (2a) include ridgelines (23,24) facing convexly toward the outside, and the rear winkers (3) are provided with a light source (3a), which is arranged in a position not to overlap the ridgelines (23,24) of the partitions (2a) as viewed from the rear.

8. Saddle-ride type vehicle according to one of the claims 1 to 3, wherein the lens (5b) of the taillight (5), the partitions (2a), and the lenses (3b) of the rear winkers (3) include ridgelines (22,23,24,25,26), which extend substantially in the longitudinal direction and are contiguous to one another.

9. Saddle-ride type vehicle according to one of the claims 1 to 8, wherein the lenses (3b) of the rear winkers (3) are transparent.

10. Saddle-ride type vehicle according to one of the claims 1 to 9, wherein the lens (5b) of the taillight (5) includes a rearwardly upward, inclined surface or a rearwardly downward, inclined surface.

11. Saddle-ride type vehicle according to one of the claims 1 to 10, wherein the partitions (2a) extend in predetermined directions as viewed in the side view and lengths of the partitions (2a) in a direction perpendicular to lengthwise directions thereof are substantially constant in the lengthwise directions of the partitions (2a).

12. Saddle-ride type vehicle according to one of the claims 1 to 10, wherein the partitions extend in a direction perpendicular to the vertical as viewed in the side view, and lengths of the partitions in a direction perpendicular to lengthwise directions thereof are substantially constant in the lengthwise directions of the partitions (2a).

13. Saddle-ride type vehicle according to one of the claims 1 to 12, wherein the lenses (3b) of the rear winkers (3) project toward the outside.

14. Saddle-ride type vehicle according to claim 13, wherein the lenses (3b) of the rear winkers (3) project further toward the outside than the cover (2) does, as viewed in the plan view.

15. Saddle-ride type vehicle according to claim 14, wherein the rear winkers (3) are formed to be substantially triangular-shape, as viewed in the plan view.

16. Saddle-ride type vehicle according to one of the claims 1 to 15, wherein an angle formed by tangents at front ends of the both partitions (2a) is not less than 40° but not more than 140° as viewed in the plan view.

17. Saddle-ride type vehicle according to claim 16, wherein the taillight (5) is arranged forwardly and inwardly of the both tangents as viewed in the plan view.

18. Saddle-ride type vehicle according to one of the claims 1 to 17, wherein a ratio L1/L2 of a distance L1 between outer ends of the both rear winkers (3) in a direction along a vehicle breadth to a distance L2 between rear ends of the both rear winkers (3) in the direction along the vehicle breadth is 1.5 or more.

## Patentansprüche

1. Fahrzeug (11) vom Grätschsitz- Typ, aufweisend ein Rücklicht (5), das eine Linse (5b) hat, rechte und linke hintere Blinklichter (3), die jeweils eine Linse (3b) haben, und eine Abdeckung (2), die Trennwände (2a) zwischen dem Rücklicht (5) und dem jeweiligen hinteren Blinklicht (3) hat, und wobei
in einer Seitenansicht,
hintere Enden der Linsen (3b) der jeweiligen hinteren Blinklichter (3) hinter einem vorderen Ende der Linse (5b) des Rücklichtes (5) positioniert sind, und zumindest Abschnitte der Linsen (3b) der jeweiligen hinteren Blinklichter (3) unter einem oberen Ende der Linse (5b) des Rücklichtes (5) positioniert sind, so dass in der Seitenansicht die jeweiligen hinteren Blinklichter (3) und das Rücklicht (5) einander zumindest teilweise in einer vertikalen Richtung überlappen,
**dadurch gekennzeichnet, dass** in einer Draufsicht, die hinteren Blinklichter (3), die Trennwände (2a) und das Rücklicht (5) gemeinsam ein im Wesentlichen V-förmiges Profil bilden und zumindest Abschnitte der Linsen (3b) der jeweiligen hinteren Blinklichter (3) oberhalb eines unteren Endes der Linsen (3b) des Rücklichtes (5) positioniert sind, so dass in der Seitenansicht die jeweiligen hinteren Blinklichter (3) und das Rücklicht (5) einander zumindest teilweise in einer Längsrichtung überlappen.

2. Fahrzeug (11) vom Grätschsitz- Typ, aufweisend ein Rücklicht (5), das eine Linse (5b) hat, rechte und linke hintere Blinklichter (3), die jeweils eine Linse (3b) haben, und ein Gehäuse (2), das Trennwände (2a) zwischen dem Rücklicht (5) und dem jeweiligen hinteren Blinklicht (3) hat, und wobei
in einer Rückansicht
innere Enden der Linsen (3b) der jeweiligen hinteren Blinklichter (3) nach innen der äußeren Enden der Linse (5b) des Rücklichtes (5) positioniert sind, und
zumindest Abschnitte der Linsen (3b) der jeweiligen hinteren Blinklichter (3) unter einem oberen Ende der Linsen (3b) des Rücklichtes (5) positioniert sind, so dass in der Rückansicht die jeweiligen hinteren Blinklichter (3) und das Rücklicht (5) einander zumindest teilweise in einer vertikalen Richtung überlappen,
**dadurch gekennzeichnet, dass** in einer Draufsicht die hinteren Blinklichter (3), die Trennwände (2a) und das Rücklicht (5) gemeinsam ein im Wesentlichen V-förmiges Profil bilden und zumindest Abschnitte der Linsen (3b) der jeweiligen hinteren Blinklichter (3) oberhalb eines unteren Endes der Linsen des Rücklichtes positioniert sind, so dass in der Rückansicht die jeweiligen hinteren Blinklichter (3) und das Rücklicht (5) einander zumindest teilweise in einer rechten und linken Richtung überlappen.

3. Fahrzeug vom Grätschsitz- Typ nach Anspruch 1, wobei, wenn von der Rückansicht gesehen, innere Enden der Linsen (3b) der jeweiligen hinteren Blinklichter (3) nach innen der äußeren Enden der Linse (5b) des Rücklichtes (5) positioniert sind und wobei zumindest Abschnitte der Linsen (3b) der jeweiligen hinteren Blinklichter (3) unter dem oberen Ende der Linse (5b) des Rücklichtes (5) und oberhalb der unteren Enden der Linse (5b) des Rücklichtes (5) positioniert sind.

4. Fahrzeug (11) vom Grätschsitz- Typ nach einem der Ansprüche 1 bis 3, wobei die Linsen (3b) der hinteren Blinklichter (3) Kanten (26) enthalten, die konvex in Richtung zu der Außenseite gewandt sind.

5. Fahrzeug vom Grätschsitz- Typ nach einem der Ansprüche 1 bis 4, wobei die Trennwände (2a) Kanten (23, 24) enthalten, die konvex in Richtung zu der Außenseite gewandt sind.

6. Fahrzeug vom Grätschsitz- Typ nach einem der Ansprüche 1 bis 3, wobei die Linsen (3b) der hinteren Blinklichter (3) und die Trennwände (2a) jeweils Kanten (22, 23, 24, 26) enthalten, die konvex in Richtung zu der Außenseite gewandt sind und wobei die Kanten (23, 24) der Trennwände (2a) und die Kanten (22, 26) der Linsen (3b) der hinteren Blinklichter (3) einander nicht überlappen, wenn von hinten gesehen.

7. Fahrzeug vom Grätschsitz- Typ nach einem der Ansprüche 1 bis 3, wobei die Trennwände (2a) Kanten (23, 24) enthalten, die konvex in Richtung zu der Außenseite gewandt sind, und die hinteren Blinklichter (3) mit einer Lichtquelle (3a) versehen sind, die in einer Position angeordnet sind, um nicht die Kanten (23, 24) der Trennwände (2a) zu überlappen, wenn von hinten gesehen.

8. Fahrzeug vom Grätschsitz- Typ nach einem der Ansprüche 1 bis 3, wobei die Linse (5b) des Rücklichtes (5), die Trennwände (2a) und die Linsen (3b) der hinteren Blinklichter (3) Kanten (22, 23, 24, 25, 26) enthalten, die sich im Wesentlichen in der Längsrichtung erstrecken und zueinander fortgesetzt sind.

9. Fahrzeug vom Grätschsitz- Typ nach einem der Ansprüche 1 bis 8, wobei die Linsen (3b) der hinteren Blinklichter (3) transparent sind.

10. Fahrzeug vom Grätschsitz- Typ nach einem der Ansprüche 1 bis 3, wobei die Linse (5b) des Rücklichtes (5) eine nach hinten, nach oben geneigte Oberfläche oder eine nach hinten, nach unten geneigte Oberfläche hat.

11. Fahrzeug vom Grätschsitz- Typ nach einem der Ansprüche 1 bis 10, wobei sich die Trennwände (2a) in vorbestimmten Richtungen erstrecken, wenn in der Seitenansicht gesehen, und Längen der Trennwände (2a) in einer Richtung rechtwinklig zu längsweisen Richtungen derselben im Wesentlichen in den längsweisen Richtungen der Trennwände (2a) konstant sind.

12. Fahrzeug vom Grätschsitz- Typ nach einem der Ansprüche 1 bis 10, wobei sich die Trennwände in einer Richtung rechtwinklig zu der Vertikalen erstrecken, wenn in der Seitenansicht gesehen, und Längen der Trennwände in einer Richtung rechtwinklig zu längsweisen Richtungen derselben im Wesentlichen in den längsweisen Richtung der Trennwände (2a) konstant sind.

13. Fahrzeug vom Grätschsitz- Typ nach einem der Ansprüche 1 bis 12, wobei die Linsen (3b) der hinteren Blinklichter (3) in Richtung zu der Außenseite vorspringen.

14. Fahrzeug vom Grätschsitz- Typ nach Anspruch 13, wobei die Linsen (3b) der hinteren Blinklichter (3) weiter in Richtung zu der Außenseite auf die Abdeckung (2) vorspringen, wenn in der Draufsicht gesehen.

15. Fahrzeug vom Grätschsitz- Typ nach Anspruch 14, wobei die hinteren Blinklichter (3) gebildet sind, um im Wesentlichen in Dreiecksform zu sein, wie in der Draufsicht gesehen.

16. Fahrzeug vom Grätschsitz- Typ nach einem der Ansprüche 1 bis 15, wobei ein Winkel, gebildet durch Tangenten an vorderen Enden der beiden Trennwände (2a), nicht kleiner als 40°, aber nicht größer als 140° ist, wenn in der Draufsicht gesehen.

17. Fahrzeug vom Grätschsitz- Typ nach Anspruch 16, wobei das Rücklicht (5) nach vor oder einwärts der beiden Tangenten angeordnet ist, wenn in der Draufsicht gesehen.

18. Fahrzeug vom Grätschsitz- Typ nach einem der Ansprüche 1 bis 17, wobei ein Verhältnis L1/L2 eines Abstandes L1 zwischen äußeren Enden der beiden hinteren Blinklichter (3) in einer Richtung entlang einer Breite des Fahrzeuges zu einem Abstand L2 zwischen hinteren Enden der beiden hinteren Blinklichter (3) in der Richtung entlang der Breite des Fahrzeuges 1,5 oder mehr beträgt.

## Revendications

1. Véhicule du type à selle (11) comprenant un feu arrière (5) avec une lentille (5b), des clignotants arrière droit et gauche (3) avec chacun une lentille (3b), et un recouvrement (2) avec des cloisons (2a) entre le feu arrière (5) et les clignotants (3) respectifs, et
vu de côté,
les extrémités arrière des lentilles (3b) des clignotants arrière (3) respectifs sont placées à l'arrière d'une extrémité avant de la lentille (5b) du feu arrière (5), et
des parties au moins des lentilles (3b) des clignotants arrière (3) respectifs sont placées au-dessous d'une extrémité supérieure de la lentille (5b) du feu arrière (5), de sorte que vus de côté, les clignotants arrière (3) respectifs et le feu arrière (5) se recouvrent au moins partiellement dans un sens vertical,
**caractérisé en ce que** vus en plan, les clignotants arrière (3), les cloisons (2a) et le feu arrière (5) forment ensemble un profil globalement en V, et des parties au moins des lentilles (3b) des clignotants arrière (3) respectifs sont placées au-dessus d'une extrémité inférieure de la lentille (5b) du feu arrière (5), de sorte que vus de côté, les clignotants arrière (3) respectifs et le feu arrière (5) se recouvrent au moins partiellement dans un sens longitudinal.

2. Véhicule du type à selle (11) comprenant un feu arrière (5) avec une lentille (5b), des clignotants arrière droit et gauche (3) avec chacun une lentille (3b), et un recouvrement (2) avec des cloisons (2a) entre le feu arrière (5) et les clignotants (3) respectifs, et
vu de l'arrière,
les extrémités intérieures des lentilles (3b) des clignotants arrière (3) respectifs sont placées vers l'intérieur des extrémités extérieures de la lentille (5b) du feu arrière (5), et
des parties au moins des lentilles (3b) des clignotants arrière (3) respectifs sont placées au-dessous d'une extrémité supérieure de la lentille (5b) du feu arrière (5), de sorte que vus de l'arrière, les clignotants arrière (3) respectifs et le feu arrière (5) se recouvrent au moins partiellement dans un sens vertical,
**caractérisé en ce que** vus en plan, les clignotants arrière (3), les cloisons (2a) et le feu arrière (5) forment ensemble un profil globalement en V, et des parties au moins des lentilles (3b) des clignotants arrière (3) respectifs sont placées au-dessus d'une extrémité inférieure de la lentille du feu arrière, de sorte que vus de l'arrière, les clignotants arrière (3) respectifs et le feu arrière (5) se recouvrent au moins partiellement dans un sens droite-gauche.

3. Véhicule du type à selle selon la revendication 1, dans lequel, vues de l'arrière, les extrémités intérieures des lentilles (3b) des clignotants arrière (3) respectifs sont placées vers l'intérieur des extrémités extérieures de la lentille (5b) du feu arrière (5), et des parties au moins des lentilles (3b) des clignotants arrière (3) respectifs sont placées au-dessous de l'extrémité supérieure de la lentille (5b) du feu arrière (5) et au-dessus de l'extrémité inférieure de la lentille (5b) du feu arrière (5).

4. Véhicule du type à selle selon l'une des revendications 1 à 3, dans lequel les lentilles (3b) des clignotants arrière (3) comprennent des lignes saillantes (22, 26) qui sont dirigées avec une forme convexe vers l'extérieur.

5. Véhicule du type à selle selon l'une des revendications 1 à 4, dans lequel les cloisons (2a) comprennent des lignes saillantes (23, 24) qui sont dirigées avec une forme convexe vers l'extérieur.

6. Véhicule du type à selle selon l'une des revendications 1 à 3, dans lequel les lentilles (3b) des clignotants arrière (3) et les cloisons (2a) comprennent respectivement des lignes saillantes (22, 23, 24, 26) qui sont dirigées avec une forme convexe vers l'extérieur, et les lignes saillantes (23, 24) des cloisons (2a) et les lignes saillantes (22, 26) des lentilles (3b) des clignotants arrière (3) ne se recouvrent pas, vues de l'arrière.

7. Véhicule du type à selle selon l'une des revendications 1 à 3, dans lequel les cloisons (2a) comprennent des lignes saillantes (23, 24) qui sont dirigées avec une forme convexe vers l'extérieur, et les clignotants arrière (3) sont pourvus d'une source de lumière (3a) qui est disposée de manière à ne pas recouvrir les lignes saillantes (23, 24) des cloisons (2a), vue de l'arrière.

8. Véhicule du type à selle selon l'une des revendications 1 à 3, dans lequel la lentille (5b) du feu arrière (5), les cloisons (2a) et les lentilles (3b) des clignotants arrière (3) comprennent des lignes saillantes (22, 23, 24, 25, 26) qui s'étendent globalement dans le sens longitudinal et qui sont contiguës.

9. Véhicule du type à selle selon l'une des revendications 1 à 8, dans lequel les lentilles (3b) des clignotants arrière (3) sont transparentes.

10. Véhicule du type à selle selon l'une des revendications 1 à 9, dans lequel la lentille (5b) du feu arrière (5) comprend une surface inclinée vers l'arrière et vers le haut, ou une surface inclinée vers l'arrière et vers le bas.

11. Véhicule du type à selle selon l'une des revendications 1 à 10, dans lequel les cloisons (2a) s'étendent dans des directions prédéterminées, vues de côté, et leurs longueurs dans une direction perpendiculaire à leurs directions longitudinales sont globalement constantes dans leurs directions longitudinales.

12. Véhicule du type à selle selon l'une des revendications 1 à 10, dans lequel les cloisons d'étendent dans une direction perpendiculaire à la verticale, vues de côté, et leurs longueurs dans une direction perpendiculaire à leurs directions longitudinales sont globalement constantes dans leurs directions longitudinales.

13. Véhicule du type à selle selon l'une des revendications 1 à 12, dans lequel les lentilles (3b) des clignotants arrière (3) dépassent vers l'extérieur.

14. Véhicule du type à selle selon la revendication 13, dans lequel les lentilles (3b) des clignotants arrière (3) dépassent plus vers l'extérieur que le recouvrement (2), vus en plan.

15. Véhicule du type à selle selon la revendication 14, dans lequel les clignotants arrière (3) sont formés de manière à être globalement triangulaires, vus en plan.

16. Véhicule du type à selle selon l'une des revendications 1 à 15, dans lequel un angle formé par les tangentes aux extrémités avant des deux cloisons (2a) n'est pas inférieur à 40°, mais n'est pas supérieur à 140°, vu en plan.

17. Véhicule du type à selle selon la revendication 16, dans lequel le feu arrière (5) est disposé vers l'avant et vers l'intérieur des deux tangentes, vu en plan.

18. Véhicule du type à selle selon l'une des revendications 1 à 17, dans lequel un rapport L1/L2 d'une distance L1 entre les extrémités extérieures des deux clignotants (3) dans une direction longeant une largeur du véhicule, sur une distance L2 entre les extrémités arrière des deux clignotants (3) dans la direction longeant la largeur du véhicule est de 1,5 ou plus.
